(19) Europäisches Patentamt

European Patent Office

Office européen des brevets

(11) EP 0 994 368 A2

(12) **EUROPEAN PATENT APPLICATION**

(43) Date of publication:
19.04.2000 Bulletin 2000/16

(51) Int. Cl.[7]: **G02B 1/11**

(21) Application number: **99120415.7**

(22) Date of filing: **13.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.10.1998 JP 29058298**
**12.04.1999 JP 10440899**

(71) Applicant: **NIKON CORPORATION**
**Tokyo (JP)**

(72) Inventor:
**Shirai, Takeshi**
**c/o Nikon Corporation**
**Chiyoda-ku, Tokyo (JP)**

(74) Representative:
**Viering, Jentschura & Partner**
**Postfach 22 14 43**
**80504 München (DE)**

(54) **Anti-reflective films, optical elements and reduction-projection exposure apparatus utilizing same**

(57)    An optical anti-reflective film includes five layers are laminated on the surface of a substrate, wherein the first, third and fifth layers as counted from the substrate side consist of a low-refractive-index material, the second and fourth layers consist of a high-refractive-index material, and the sum of the optical film-thicknesses of the first, second and third layers is in the range of $0.8\lambda_0$ to $1.2\lambda_0$ inclusive, and the optical film-thicknesses of the fourth and fifth layers are respectively in the range of $0.2\lambda_0$ to $0.3\lambda_0$ inclusive, where $\lambda_0$ is a selected wavelength of light with which the film may be used, desirable in the range of 150 to 300 nm.

FIG. 1

## Description

Field of the Invention

The present invention relates to anti-reflective films for use with light, especially ultraviolet light, and that show an extremely low reflectivity both throughout a broad wavelength region and at a small film-thickness ratio, and also throughout a broad angle-of-incidence range. The present invention also relates to optical elements and reduction-projection exposure apparatus equipped with such an anti-reflective film.

Background and Summary

In recent years there has been a demand for higher-resolution reduction-projection exposure apparatus (stoppers) in order to increase the density of semiconductor elements in integrated circuit devices. Generally, the resolution R of a photolithographic process can be expressed as follows:

$$R = k \cdot \lambda/NA \qquad (1)$$

where k is a constant, $\lambda$ is the exposure wavelength, and NA is the numerical aperture of the optical system, respectively.

As may be seen readily from expression (1) above, one method of increasing the resolution of a photolithographic process is to employ a shorter-wavelength light as the exposure wavelength. It has recently become possible to generate light of wavelengths shorter than the wavelengths of mercury lamps. Desirably bright sources of such light include lasers, such as KrF excimer lasers ($\lambda \cong 248$ nm) and ArF excimer been ($\lambda \cong 193$ nm), and the like.

In the optical systems of steppers, it is generally necessary to form anti-reflective coatings or films on the surfaces of various optical elements in order to reduce light loss, flare and ghosts, end the like caused by surface reflection from optical elements. If such anti-reflective films are formed from film substances that show a significant absorption with respect to the desired short-wavelength light, or from film substances that have a low resistance to lasers, light loss can occur due to absorption and film destruction or changes in the substrate surface. Thus it is desirable that the film substances used have low absorption at short wavelengths and a high resistance to lasers.

Film substances useful at the above-mentioned laser wavelengths are limited, and generally consist mainly of fluoride compounds, such as magnesium fluoride ($MgF_2$) and the like, and some oxides, such as silicon oxide ($SiO_2$) and the like. The substrate materials useful in optical elements such as lenses for such wavelengths are likewise limited, generally to fluoride crystals, such as fluorite ($CaF_2$) and the like, and to quart glass and the like. It is known that limitations on substrate materials and film substances generally become more stringent as the wavelength of the light source used becomes shorter.

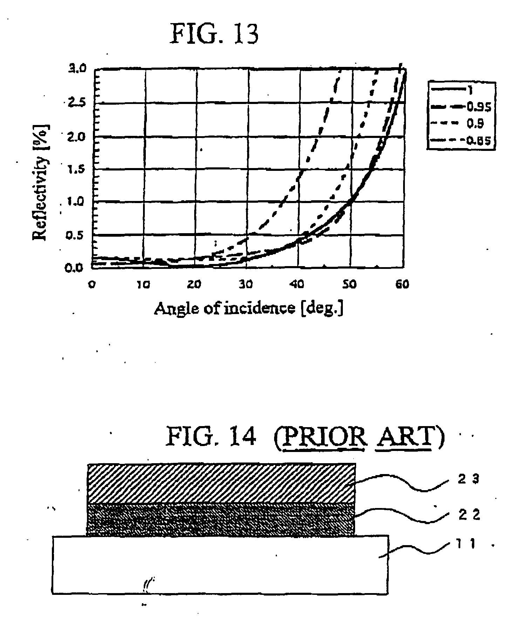

A known anti-reflective film is shown in FIG. 14 and is demonstrated herein as Conventional Example 1. This film has a two-layer construction in which a high-refractive-index layer 22 and a low-refractive-index layer 23 are successively laminated on a substrate 11.

A known condition for preventing reflection in an anti-reflective film with a two-layer structure is

$$\frac{n_s}{n_0} \leq \left(\frac{n_H}{n_L}\right)^2 \qquad (2)$$

where $n_S$ is the refractive index of the substrate, $n_O$ is the refractive index of the medium, $n_L$ is the refractive index of the low-refractive-index layer, and $n_H$ is the refractive index of the high-refractive-index layer. In a case where the design center wavelength $\lambda_0$ is 193 nm (the design center wavelength is customarily used as a unit specifying the film-thickness of thin films; ordinarily, the wavelength at which reflection is to be prevented, or a wavelength in the vicinity of this wavelength, is specified), the substrate 11 may be formed from quartz glass ($n_S = 1.55$), and, as usable film materials, lanthanum fluoride ($LaF_3$, $n_H = 1.69$) may be selected for the high-retractive-index layer 22, and magnesium fluoride ($MgF_2$, $n_L = 1.42$) may be selected for the low-refractive-index layer 23. If these values are substituted into expression (2) above, then the inequality must be reversed in order to obtain a true expression, as follows:

$$\frac{1.56}{1} > \left(\frac{1.69}{1.42}\right)^2 \approx 1.42 \qquad\qquad (3)$$

Thus it is seen that the anti-reflective condition is not satisfied.

When the desired wavelength $\lambda$ = 193 nm in the case of the aforementioned two-layer anti-reflective film of Conventional Example 1 using the substrate and film substances described above, the reflectivity is lowest in the case of the following construction;

| | |
|---|---|
| Substrate: | Quartz glass |
| First layer: | LaF$_3$ 0.25$\lambda_0$ |
| Second layer: | MgF$_2$ 0.25$\lambda_0$ |
| Medium: | Air |

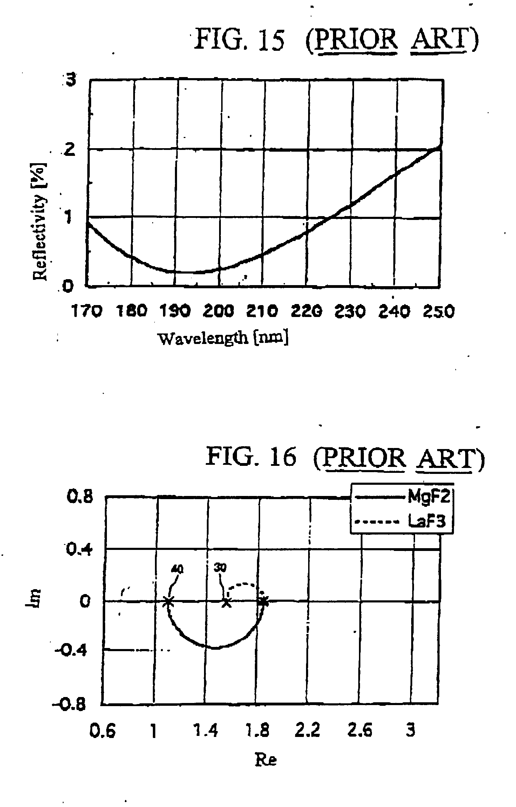

FIG. 15 shows the reflectivity characteristics of the anti-reflective film of Conventional Example 1 at an angle of incidence of $\theta$ = 0°, and FIG. 16 shows the optical admittance at an angle of incidence of $\theta$ = 0° and a wavelength of $\lambda$ = 193 nm. Reference character 30 indicates the initial point of the optical admittance track, while 40 indicates the endpoint. The same characters will be used to refer to corresponding portions of other optical admittance graphs. The optical admittance graph in FIG. 16 shows that the endpoint of the admittance track of the two-layer anti-reflective film of Conventional Example 1 is (1.1, 0). It may be seen from FIG. 15 that the residual reflectivity of the two-layer anti-reflective film of Conventional Example 1, at $\lambda$ = 193 nm and $\theta$ = 0°. is approximately 0.2%.

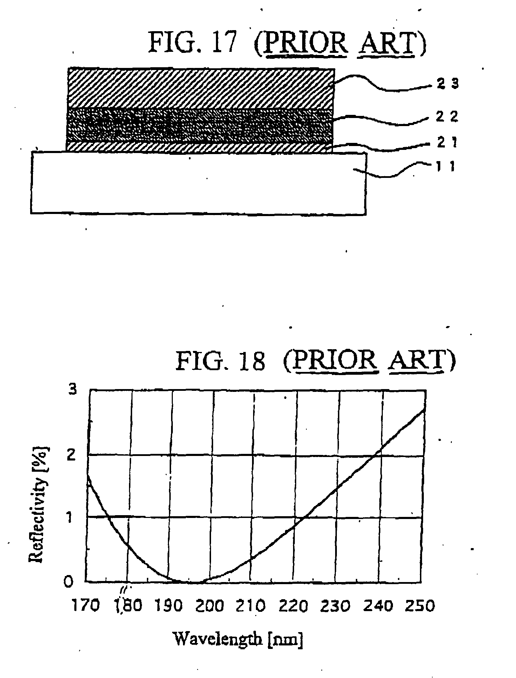

A Conventional Example 2 is shown in FIG. 17. FIG. 17 shows an anti-reflective film such as that disclosed in Japanese Patent Application No. 8-147019. The film has a structure in which three layers, a low-refractive-index layer 21, a high-refractive-index layer 22, and a low-refractive-index layer 23, are laminated in that order on a substrate 11 as shown in FIG. 17. Typical materials and film-thicknesses are as follows:

| | |
|---|---|
| Substrate: | Quartz glass |
| First layer: | MgF$_2$ 0.10$\lambda_0$ |
| Second layer: | LaF$_3$ 0.30$\lambda_0$ |
| Third layer: | MgF$_2$ 0.25$\lambda_0$ |
| Medium: | Air |

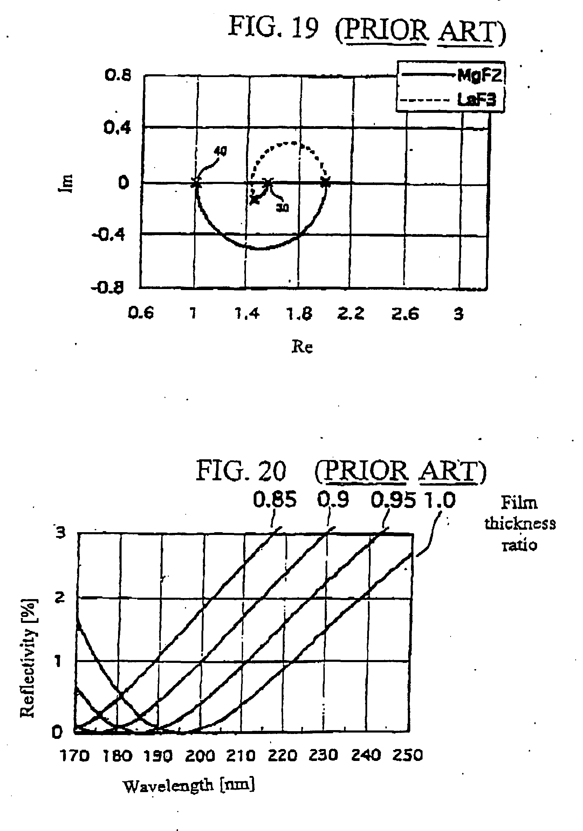

Here, the design center wavelength $\lambda_0$ is 193 nm. FIG. 18 shows the reflectivity characteristics of the anti-reflective film of Conventional Example 2 at an angle of incidence of $\theta$ = 0°, end FIG. 19 shows the optical admittance graph at an angle of Incidence of $\theta$ = 0° and a wavelength at $\lambda$ = 193 nm. As a result of the use of a three-layer construction as described above, the endpoint of the admittance track is close to the point (1, 0) (indicating the refractive index of air) in the optical admittance graph shown in FIG. 19. Consequently it is seen from FIG. 18 that the residual reflectivity can be reduced to virtually 0% in the case of this three-layer anti-reflective film at $\lambda$ = 193 nm, $\theta$ = 0°.

The aforementioned anti-reflective films of Conventional Example 1 and Conventional Example 2 suffer from the following problems.

In cases where the two-layer anti-reflective film of Conventional Example 1 is used in an actual optical system consisting of many lenses, e.g., fifty lenses in a reduction-projection exposure apparatus, light passes through two-layer anti-reflective films on as many as 100 surfaces. As a result, because of the above-mentioned residual reflectivity, an amount of light that is close to 20% (1 - (1 - 0.002)$^{100}$ $\cong$ 0.18) does not pass through, so that there is a significant drop in exposure efficiency. Furthermore, such reflected light is also a cause of flare and ghosts, and the like, and thus leads to a drop in the accuracy of exposure. In order to reduce such residual reflectivity, it is necessary that the endpoint of the track of the admittance be caused to approach the point (1. 0) (indicating the refractive index of the medium. i.e., air) in the optical admittance graph shown in FIG. 16. For this purpose, it is conceivable that the following structure:

a substrate with a lower refractive index,
a high-refractive-index film substance, and
a low-refractive-index film substance,

might satisfy the aforementioned anti-reflective condition. As described above, however, the types of substrates and film substances that can be used are limited. As a result, a slight amount of residual reflectivity has generally been unavoidable in the case of the two-layer construction of Conventional Example 1.

As mentioned above, the anti-reflective film of Conventional Example 2 makes it possible to reduce the residual reflectivity to a value of almost 0%. However, it has been found that, when vacuum evaporation is employed to form such a film on a lens having a curvature such as that used in an optical system, the thickness of the anti-reflective film formed on the surface of the lens generally varies from the central portion of the lens to the peripheral portions of the lens. Generally, in both convex lenses and concave lenses, the film-thickness gradually becomes thinner from the central portion of the lens toward the peripheral portions of the lens. This tendency is more pronounced on lens surfaces with a smaller radius of curvature. As a result, the anti-reflective band in the peripheral portions of the lens is shifted to shorter wavelengths than the anti-reflective band in the central portion of the lens by an amount corresponding to the decrease in the film-thickness.

If the ratio of the film-thickness in the peripheral portions to the film-thickness in the central portion is less than a certain value, then there is a shift away from the affective and-reflective band in the peripheral portions of the lens. The ratio of the minimum film-thickness to the maximum film-thickness is defined and referred to herein as the "film-thickness ratio," with the maximum film-thickness (the reference film-thickness) within the area of the substrate being taken as 1 unity.

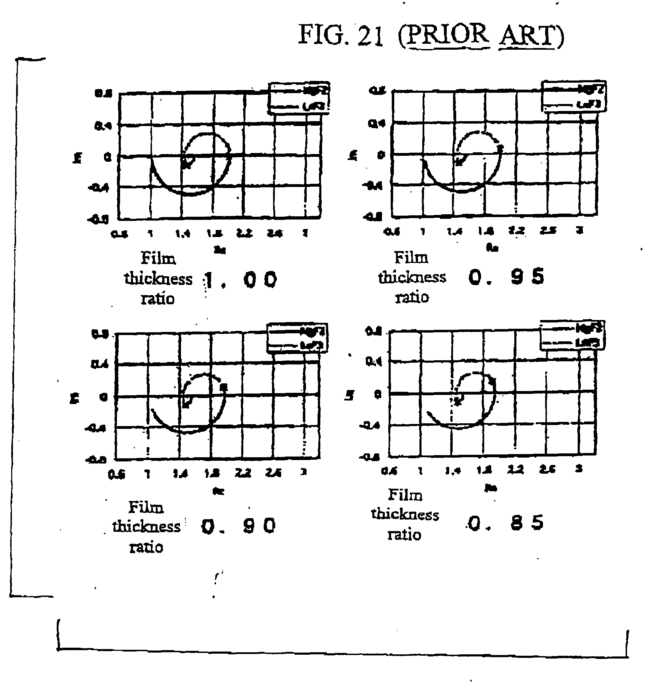

FIG. 20 shows the reflectivity characteristics of the anti-reflective film of Conventional Example 2 at an angle of incidence of θ = 0°, for respective film-thickness ratios of 1.00, 0.95, 0.90, and 0.85. FIG. 21 shows respective optical admittance graphs at an angle of incidence of θ = 0° and a wavelength of λ = 193 nm. In FIG. 20, it may be seen that the reflectivity for λ = 193 nm already exceeds 0.5% at a film-thickness ratio of 0.90, and reaches a value of approximately 1.3% at a film-thickness ratio of 0.85. It may also be seen from the optical admittance graphs shown in FIG. 21 that the endpoint of the optical admittance track gradually recedes from the point (1, 0) as the film-thickness ratio decreases. Due to the tendency for the endpoint of the optical admittance track to gradually recede from the point (1, 0) (the refractive index of air) as the film-thickness ratio decreases, and for the residual reflectivity to increase as the film-thickness ratio decreases, the actual performance of the anti-reflective film in Conventional Example 2 is typically the same as at similar to the anti-reflective film of Conventional Example 1, at least on a curved surface.

In other words, in conventional anti-reflective films, the film-thickness ratio range that shows a desired anti-reflective effect, e. g., the film-thickness ratio range at which a low reflectivity of 0.5% or less can be maintained, is narrow, As a result, such films generally cannot manifest a desired anti-reflective effect on curved lens surfaces when the film-thickness ratio may be 0.9 or less.

As may be seen from expression (1) above, the resolution of a photolithographic process may be increased by increasing the numerical aperture (NA) of the optical system employed. Increasing the numerical aperture of an optical system generally increases the angular range of the light rays incident on the lenses of the system. Thus it is desirable that anti-reflective films have anti-reflective effects with respect to relatively broad angles of incidence.

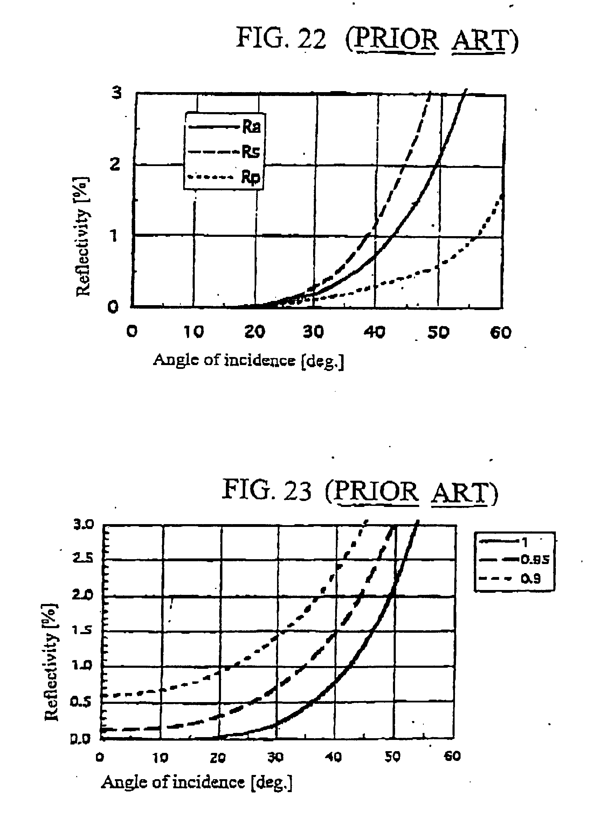

FIG. 22 shows the angle-of-incidence characteristics at the anti-reflective film of Conventional Example 2 at λ = 193 nm. Rs indicates the reflectivity with respect to the s-polarized light of the polarized component, Rp indicates the reflectivity with respect to the p-polarized light of the polarized component, and Ra indicates the average reflectivity. In FIG. 22, it may be seen that the angle-of-incidence range satisfying the above-mentioned condition-that the reflectivity Ra desirably be 0.5% or less-is θ = 0 to 35°, so that a satisfactory anti-reflective effect cannot be obtained in this example at angles of incidence greater than 35°. At θ = 43°, the reflectivity is up to 1%.

Even in cases where it is sufficient that the angle-of-incidence range satisfying the condition for low reflectivity is θ = 0 to 35°, there is generally a difference in film-thickness between the central portion and the peripheral portion of a curved lens surface according to the curvature of the surface, as described above. As a result, the reflection characteristics in the peripheral portions of the lens are typically even poorer than those shown in FIG. 22. FIG. 23 shows the angular characteristics of the reflectivity at λ = 193 nm in the case of the anti-reflective film of Conventional Example 2 for respective film-thickness ratios of 1.0, 0.95, and 0.90. It may be seen from FIG. 23 that the reflectivity rises, and the angular range that satisfies the condition for low reflectivity becomes narrower, as the film-thickness ratio decreases. At a film-thickness ratio of 0.95, the angle-of-incidence range at which the reflectivity is 0.5% or less is narrowed to θ = 0 to approximately 25°. At a film-thickness ratio of 0.90, there is no longer any angle at which the reflectivity is 0.5% or less--the reflectivity is 0.6%, even in the case of perpendicular incidence.

As described above in the conventional examples, the anti-reflective film of Conventional Example 1 has a residual reflectivity that cannot be ignored. In the case of the anti-reflective film of Conventional Example 2, the residual reflectivity can be reduced to almost 0%, but as the film-thickness ratio decreases, the reflectivity increases, especially when the film-thickness ratio falls below 0.9. Furthermore, the angle-of-incidence range in which the condition for low reflectivity can be satisfied becomes narrower, and in particular, the angle-of-incidence range in which a low reflection of 0.5% or less can be achieved is narrowed. As a result, the anti-reflective film of Conventional Example 2 cannot effectively exhibit a desired anti-reflective effect in lenses that have a curvature. Moreover, such an anti-reflective film cannot be used under conditions in which the angle of incidence is large. In particular, the anti-reflective film of Conventional Example 2 cannot effectively exhibit a desired anti-reflective effect in a desirably broad angle-of-incidence range in the case of lenses having a curvature which is such that the film-thickness ratio is less than 0.9.

The present invention was devised in light of such problems. One object of the present invention is to provide an anti-reflective film (and an optical element and a reduction-projection exposure apparatus utilizing the film) which has a high anti-reflective effect in a broad angle-of-incidence range in an arbitrary wavelength range within the range $\lambda_0$ = 150 to 300 nm, even when there is some non-uniformity of the film-thickness within the lens plane, such as when a layer is formed by conventional film deposition onto a curved optical surface.

The present invention provides an anti-reflective him in which five layers are laminated on a substrate and in which the first, third, and fifth layers, counted from the substrate side, consist of a material with a low refractive index, while the second, and fourth layers consist of a material with a high refractive index. When $\lambda_0$ is the design center wavelength, the sum of the optical film-thicknesses of the first, second and third layers is in the range of about $0.6\lambda_0$ to $1.2\lambda_0$, desirably $0.8\lambda_0$ to $1.2\lambda_0$, the optical film-thickness of the fourth layer is in the range of $0.2\lambda_0$ to $0.4\lambda_0$, desirably $0.2\lambda_0$ to $0.3\lambda_0$, and the optical film-thickness of the fifth layer is in the range of $0.2\lambda_0$ to $0.3\lambda_0$. (All ranges herein are inclusive of the endpoints, unless specifically noted.)

In one embodiment of the present invention, the optical film-thickness of the first layer is desirably in the range of $0.1\lambda_0$ to $0.25\lambda_0$, the optical film-thickness of the second layer is desirably in the range of $0.45\lambda_0$ to $0.6\lambda_0$, and the optical film-thickness of the third layer is desirably in the range of $0.25\lambda_0$ to $0.35\lambda_0$.

In another embodiment, the optical film-thicknesses of the first and third layers are desirably each in the range of $0.05\lambda_0$ to $0.2\lambda_0$, the optical film-thickness of the second layer is desirably in the range of $0.5\lambda_0$ to $0.8\lambda_0$, the optical film-thickness of the fourth layer is desirably in the range of $0.25\lambda_0$ to $0.4\lambda_0$, and the optical film-thickness of the fifth layer is desirably in the range of $0.2\lambda_0$ to $0.3\lambda_0$.

According to another variation, the condition $n_L < n_S < n_H$ is desirably satisfied by the anti-reflective film of the present invention, where $n_L$, $n_H$, and $n_S$ are the refractive index of the low-refractive-index material, the refractive index of the high-refractive-index material, and the refractive index of the substrate, respectively. The low-refractive-index material may consist of one or more materials selected from [i] a first set consisting of magnesium fluoride, aluminum fluoride, sodium fluoride, lithium fluoride, calcium fluoride, barium fluoride, strontium fluoride, cryolite, thiolite, and silicon oxide, [ii] a second set consisting of mixtures of two or more compounds selected from the first set, and [iii] a third set consisting of complex compounds of two or more compounds selected from the first set. The high-refractive-index material may consist of one or more materials selected from [i] a fourth set consisting of neodymium fluoride, lanthanum fluoride, gadolinium fluoride, dysprosium fluoride, yttrium fluoride, lead fluoride, and aluminum oxide, [ii] a fifth set consisting of mixtures of two or more compounds selected from the fourth set above, and [iii] a sixth set consisting of complex compounds of two or more compounds selected from fourth set. The substrate desirably transmits ultraviolet light having a wavelength in the range of 150 nm to 300 nm.

The reflectivity of the anti-reflective film of the present invention at a specified wavelength is desirably 1.0% or less in an angle-of-incidence range of 0 to 50°, and is desirably 0.5% or less at an angle of incidence of 0° across a film-thickness ratio range of 1 to 0.85. Further, the reflectivity at the specified wavelength is desirably 0.5% or less in an angle-of-incidence range of 0 to 40° across a film-thickness ratio range of 1 to 0.9.

An optical element according to the present invention may include a substrate that transmits ultraviolet light having a wavelength of 150 nm to 300 nm, and an anti-reflective film as summarized above having a low reflectivity for wavelengths selected from a wavelength range of 150 nm to 300 nm. A reduction-projection exposure apparatus according to the present invention includes one or more such optical elements.

Additional features end advantages of the present invention will be apparent to those of skill in the art from the example embodiments described below.

Brief Description of the Drawings

FIG. 1 is a sectional view of an anti-reflective film of an example embodiment.
FIG. 2 shows the reflectivity characteristics of the anti-reflective film of FIG. 1 at an angle of incidence of θ = 0°.
FIG. 3 shows the angle-of-incidence characteristics of the anti-reflective film of FIG. 1 at a wavelength of λ = 193 nm.
FIG. 4 shows the reflectivity characteristics of the anti-reflective film of FIG. 1 at an angle of incidence of θ = 0° for film-thickness ratios of 1.0, 0.95, 0.9, 0.85, and 0.8.
FIG. 5 shows optical admittance graphs for the anti-reflective film of FIG. 1 at an angle of incidence of θ = 0° and a wavelength of λ = 193 nm, as measured at respective film-thickness ratios of 1.0, 0.95, 0.9, 0.85, and 0.8.
FIG. 6 shows a sectional view of an anti-reflective film according to another example embodiment.
FIG. 7 shows the reflectivity characteristics of the anti-reflective film of FIG. 6 at an angle of incidence of θ = 0° for film-thickness ratios of 1.0, 0.95, 0.9, 0.85, and 0.8.
FIG. 8 shows the angle-of-incidence characteristics of the anti-reflective film of FIG. 6 at a wavelength of λ = 193 nm.

FIG. 9 shows a sectional view of an anti-reflective film according to yet another example embodiment.

FIG. 10 shows the reflectivity characteristics of the anti-reflective film of FIG. 9 at an angle of incidence of $\theta = 0°$.

FIG. 11 shows the angle-of-incidence characteristics of the anti-reflective film of FIG. 9 at a wavelength of $\lambda = 193$ nm.

FIG. 12 shows the reflectivity characteristics of the anti-reflective film of FIG. 9 at an angle of incidence of $\theta = 0°$ for film-thickness ratios of 1.0, 0.95, 0.9, and 0.85.

FIG. 13 shows the angle-of-incidence characteristics of the anti-reflective film of FIG. 9 for film-thickness ratios of 1.0, 0.95, 0.9, and 0.85.

FIG. 14 (Prior Art) is a sectional view of a two-layer anti-reflective film of Conventional Example 1.

FIG. 15 (Prior Art) shows the reflectivity characteristics of the two-layer anti-reflective film of FIG. 14 at an angle of incidence of $\theta = 0°$.

FIG. 16 (Prior Art) is a graph of the optical admittance of the two-layer anti-reflective film of FIG. 14 at an angle of incidence of $\theta = 0°$ and a wavelength of $\lambda = 193$ nm.

FIG. 17 (Prior Art) is a sectional view of a three-layer anti-reflective film of Conventional Example 2.

FIG. 18 (Prior Art) shows the reflectivity characteristics of the three-layer anti-reflective film of FIG. 17 at an angle of incidence of $\theta = 0°$.

FIG. 19 (Prior Art) is a graph of the optical admittance of the three-layer anti-reflective film of FIG. 17 at an angle of incidence of $\theta = 0°$ and a wavelength of $\lambda = 193$ nm.

FIG. 20 shows the reflectivity characteristics of the anti-reflective film of FIG. 17 at an angle of incidence of $\theta = 0°$ for film-thickness ratios of 1.0, 0.95, 0.9, and 0.85.

FIG, 21 shows optical admittance graphs for the three-layer anti-reflective film of FIG. 17 at an angle of incidence of $\theta = 0°$ end a wavelength of $\lambda = 193$ nm, as measured at respective film-thickness ratios of 1.00, 0.95, 0.90, and 0.85.

FIG. 22 shows the angle-of-incidence characteristics of the three-layer anti-reflective film of FIG. 17 at a wavelength of $\lambda = 193$ nm.

FIG. 23 shows the angle-of-incidence characteristics of the three-layer anti-reflective film of FIG. 17 at a wavelength $\lambda = 193$ nm, as measured at respective film-thickness ratios of 1.0, 0.95, and 0.9.

Description of Examples

Below, anti-reflective films constituting working configurations of the present invention will be described with reference to the example embodiments shown in the attached figures; however, the present invention is not limited to these descriptions.

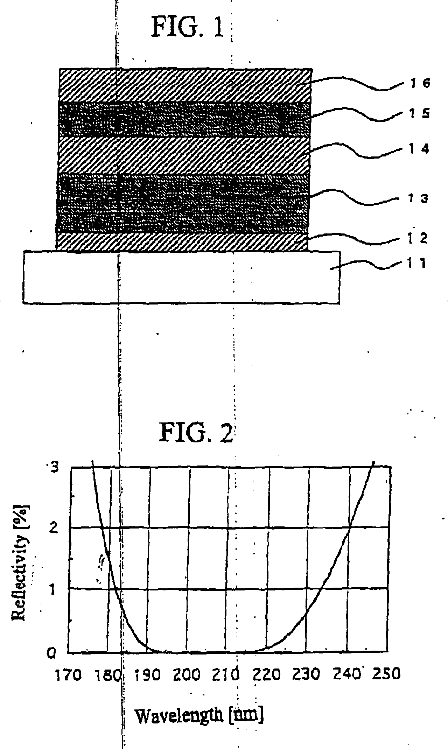

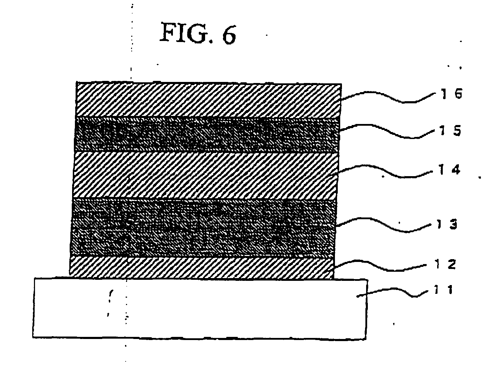

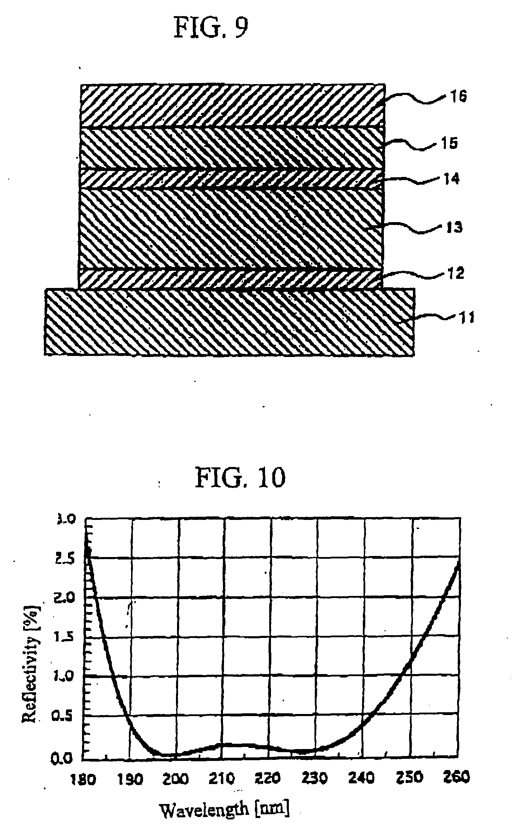

As shown for example in FIG. 1, an anti-reflective film of the present invention has a structure in which five layers are present on a substrate. A low-refractive-index layer 12 is the first layer counting up from a substrate 11, a high-refractive-index layer 13 is the second layer, a low-refractive-index layer 14 is the third layer, a high-refractive-index layer 15 is the fourth layer, and a low-refractive-index layer 16 is the fifth layer. During formation of the anti-reflective film, these five layers may be successively laminated on the substrate 11. Corresponding reference characters in FIGS. 6 and 9 refer to corresponding layers.

Where $\lambda_0$ is the design center wavelength, the optical film-thicknesses of the constituent layers of the anti-reflective films are desirably such that the sum of the optical film-thicknesses of the first, second, and third layers is in the range of $0.6\lambda_0$ to $1.2\lambda_0$, the optical film-thickness of the fourth layer is in the range of $0.2\lambda_0$ to $0.4\lambda_0$, and the optical film-thickness of the fifth layer is in the range of $0.2\lambda_0$ to $0.3\lambda_0$.

The term "low-refractive-index layer" used here indicates a layer with a refractive index lower than that of the substrate used. The material of this layer preferably consists of one or more materials selected from [i] a first set consisting of magnesium fluoride ($MgF_2$), aluminum fluoride ($AlF_3$), sodium fluoride ($NaF$), lithium fluoride ($LiF$), calcium fluoride ($CaF_2$), barium fluoride ($BaF_2$), strontium fluoride ($SrF_2$), cryolite

$$(Na_3AlF_6),$$

thiolite ($Na_5Al_3F_{18}$), and silicon oxide ($SiO_2$), [ii] a second set consisting of mixtures of two or more compounds selected from the first set, and [iii] a third set consisting of complex compounds of two or more compounds selected from the first set.

The desired anti-reflective effect can be obtained by using the same low-refractive-index material or different low-refractive-index materials in the low-refractive-index layers 12, 14, and 16.

The term "high-refractive-index layer" refers to a layer with a refractive index that is higher than that of the substrate used. The material of this layer preferably consists of one or more materials selected from [i] a fourth set consisting of neodymium fluoride ($NdF_3$), lanthanum fluoride ($LaF_3$), gadolinium fluoride ($GdF_3$), dysprosium fluoride ($DyF_3$), yttrium fluoride ($YF_3$), lead fluoride ($PbF_2$) and aluminum oxide ($Al_2O_3$), [ii] a fifth set consisting of mixtures of two or more compounds selected from the fourth set, and [iii] a sixth set consisting of complex compounds of two or more compounds selected from the fourth set.

The desired anti-reflective effect can be obtained by using the same high-refractive-index material or different high-refractive-index materials in the high-refractive-index layers 13 and 15.

Example Configuration 1

A first example configuration of an anti-reflective film corresponds to the cross-section of the film of Example Embodiment 1, as shown in FIG. 1. This example configuration of an anti-reflective film may be used to provide an optical element and a semiconductor exposure apparatus that exhibit low reflection characteristics even with a small film-thickness ratio and across a broad angle-of-incidence range.

The optical film-thicknesses of the constituent layers of the anti-reflective film of Example Configuration 1 are desirably such that the sum of the optical film-thicknesses of the first, second, and third layers is in the range of $0.8\lambda_0$ to $1.2\lambda_0$, and the optical film-thicknesses of each of the fourth and fifth layers are in the range of $0.2\lambda_0$ to $0.3\lambda_0$. These optical film-thicknesses are more desirably such that the optical film-thickness of the first layer is in the range of $0.1\lambda_0$ to $0.25\lambda_0$, the optical film-thickness of the second layer is iii the range of $0.45\lambda_0$ to $0.6\lambda_0$, and the optical film-thickness of the third layer is in the range of $0.25\lambda_0$ to $0.35\lambda_0$. Here, $\lambda_0$ is the design center wavelength, and may be arbitrarily set as desired within the range of 150 to 300 nm.

The low-refractive-index layers and high-refractive-index layers are preferably formed on the surface of the substrate 11 by a method such as vacuum evaporation, sputtering, ion plating, or a sol-gel process, or the like. Vacuum evaporation is an especially desirable method.

In the case of the present example configuration, the reflectivity at a specified wavelength can be reduced to 1.0% or less in an angle-of-incidence range of 0 to 50° and can be adjusted to 0.5% or less at an angle of incidence of 0° across a film-thickness ratio range of 1 to 0.85.

The anti-reflective film of the present example configuration is desirable for use in optical elements such as lenses and prisms. etc., used in optical applications, especially ultraviolet light applications. Optical elements with low reflection characteristics can be obtained, and the performance of a reduction-projection exposure apparatus equipped with such optical elements can be greatly improved.

Particular film compositions within this configuration of the present invention are given in Example Embodiments 1 and 2 below.

Example Configuration 2

An cross-section of an example embodiment according to another example configuration of an anti-reflective film is shown in FiG. 9. The anti-reflective film of this second example configuration may also be used to provide an optical element and a semiconductor exposure apparatus that exhibit low reflection characteristics even with a small film-thickness ratio and across a broad angle-of-incidence range.

The optical film-thicknesses of the constituent layers of the anti-reflective film of the present example configuration are preferably such that that the optical film-thicknesses of the first and third layers as counted from the substrate side are respectively in the range of $0.05\lambda_0$ to $0.2\lambda_0$, the optical film-thickness of the second layer is in the range of $0.5\lambda_0$ to $0.8\lambda_0$, the optical film-thickness of the fourth layer is in the range of $0.25\lambda_0$ to $0.4\lambda_0$, and the optical film-thickness of the fifth layer is in the range of $0.2\lambda_0$ to $0.3\lambda_0$. $\lambda_0$ is the design center wavelength and may be arbitrarily set to any desired value in the range of 150 to 300 nm.

As in the first example configuration, the low-refractive-index layers and high-refractive-index layers are preferably formed on the surface of the substrate 11 by a method such as vacuum evaporation, sputtering, ion plating, or a sol-gel process, etc. Vacuum evaporation is an especially desirable method. In the anti-reflective film of the present example configuration, the reflectivity at a specified wavelength can be adjusted to 0.5% or less across a film-thickness ratio range of 1 to 0.9 and an angle-of-incidence range of 0 to 40°. The anti-reflective film of the present working configuration is desirable for use in optical elements such as lenses and prisms, etc., used in optical applications, especially ultraviolet light applications. Optical elements with low reflection characteristics can be obtained, and the performance of a reduction-projection exposure apparatus equipped with such optical elements can be greatly improved.

A particular film composition within this example configuration are given in Example Embodiment 3 below.

7

Example Embodiment 1

An anti-reflective film of Example Embodiment 1 is shown in FIG. 1. The particular film composition of the present example embodiment is as follows:

| | |
|---|---|
| Substrate: | quartz glass |
| First layer: | $MgF_2$ $0.14\lambda_0$ |
| Second layer: | $LaF_3$ $0.56\lambda_0$ |
| Third layer: | $MgF_2$ $0.28\lambda_0$ |
| Fourth layer: | $LaF_3$ $0.27\lambda_0$ |
| Fifth layer: | $MgF_2$ $0.26\lambda_0$ |
| Medium: | air |

Here, $\lambda_0$ is the design center wavelength, and may be arbitrarily set as desired within the range of 150 to 300 nm. In this case, $\lambda_0$ is set at 193 nm. The refractive indices of the quartz glass substrate, $MgF_2$, and $LaF_3$ are 1.66, 1.42, and 1.69, respectively.

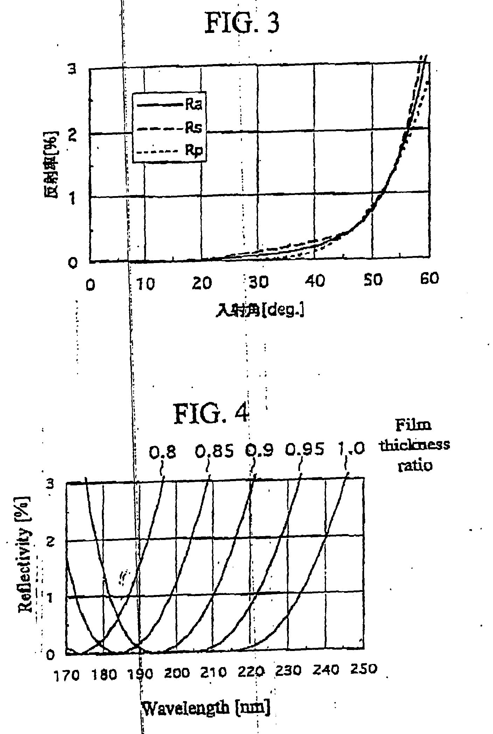

FIG. 2 shows the reflectivity characteristics at the anti-reflective film of the present example embodiment at an angle of incidence of $\theta = 0°$, and FIG. 3 shows the angle-of-incidence characteristics at a wavelength of $\lambda = 193$ nm.

It may be seen from FIG. 2 that, at an angle of incidence of $\theta = 0°$, the reflectivity is extremely low in a wavelength range of $\lambda \cong 192$ to 228 nm, and that he reflectivity characteristics are greatly improved compared to Conventional Example 1 and Conventional Example 2. Furthermore, it is seen from FIG. 3 that, for light with a wavelength of $\lambda = 193$ nm, the reflectivity values Rs, Rp, and Ra (Ra is the average reflectivity of Rs and Rp) all satisfy the condition of a reflectivity of 0.5 or less in the angle-of-incidence range of $\theta = 0$ to $46°$.

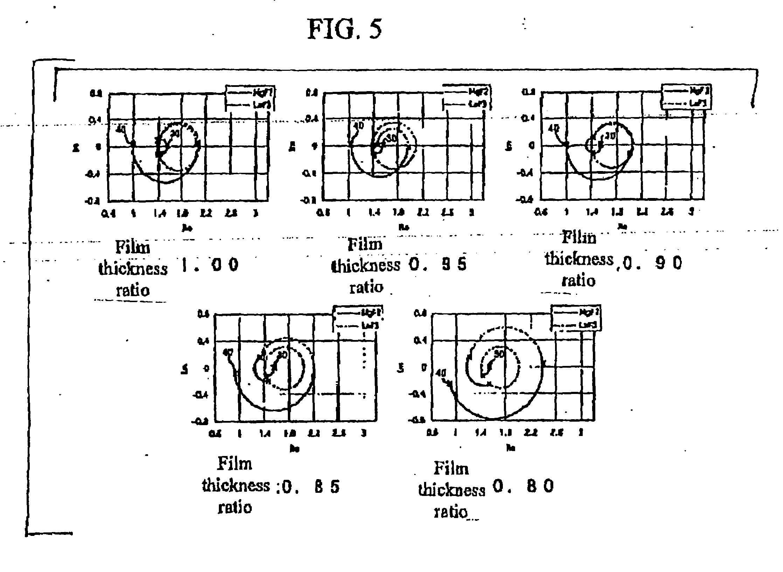

FIG. 4 shows the reflectivity characteristics of the anti-reflective film of the present example embodiment at an angle of incidence of $\theta = 0°$ for film-thickness ratios of 1.00, 0.95, 0.90, 0.85, and 0.80. FIG. 5 shows optical admittance graphs for the respective film-thickness ratios at an angle of incidence of $\theta = 0°$ and a wavelength of $\lambda = 193$ nm.

It may be seen from FIG. 4 that the reflectivity characteristics are shifted toward shorter wavelengths as the film-thickness ratio decreases, but that the reflectivity at an angle of incidence of $\theta = 0°$ and a wavelength of $\lambda = 193$ nm is still 0.5% or less down to a film-thickness ratio of approximately 0.85. In the optical admittance graphs shown in FIG. 5, it may be seen that the film-thickness ratio at which the endpoint of the admittance track begins to recede from the point (1, 0) (indicating the refractive index of air) is 0.80.

In a lens having a curvature which is such that the film-thickness ratio is 0.85 or greater, the anti-reflective film of the present example embodiment has extremely low reflectivity characteristics in the case of perpendicular incidence, and has extremely low reflectivity characteristics in terms of Rs, Rp, and Ra in an angular range of $\theta = 0$ to approximately $46°$ with respect to the angle of incidence as well.

Example Embodiment 2

The anti-reflective film of Example Embodiment 2 is shown in FIG. 6. The particular film composition of the present example embodiment is shown below.

| | |
|---|---|
| Substrate: | fluorite |
| First layer: | $AlF_3$ $0.15\lambda_0$ |
| Second layer: | $LaF_3$ $0.54\lambda_0$ |
| Third layer: | $AlF_3$ $0.32\lambda_0$ |
| Fourth layer: | $LaF_3$ $0.26\lambda_0$ |
| Fifth layer: | $MgF_2$ $0.26\lambda_0$ |
| Medium: | air |

Here, $\lambda_0$ is the design center wavelength, and may be arbitrarily set as desired within the range of 150 to 300 nm. In this case, $\lambda_0$ is set at 193 nm. The refractive indices of the fluorite substrate, $AlF_3$, $LaF_3$, and MgF2 are 1.50, 1.38, 1.69, and 1.42, respectively.

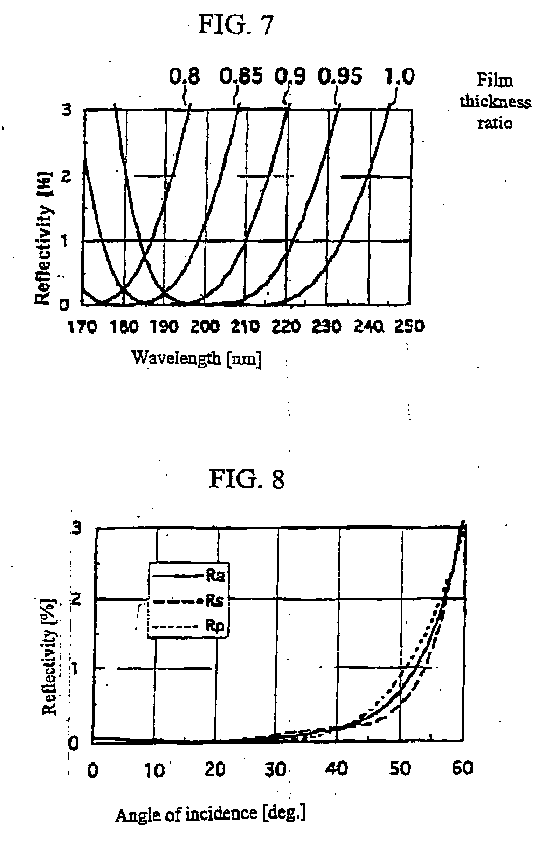

FIG. 7 shows the reflectivity characteristics of the anti-reflective film of the present example embodiment at an angle of incidence of $\theta = 0°$ for film-thickness ratios of 1.0 to 0.80, and FIG. 8 shows the angle-of-incidence characteristics at a wavelength of $\lambda = 193$ nm.

It may seen from FIG. 7 that the reflectivity characteristics are shifted toward shorter wavelengths as the film-thickness ratio decreases, but that the reflectivity at an angle of incidence of $\theta = 0°$ and a wavelength of $\lambda = 193$ nm is 0.5% or less, down to a film-thickness ratio of approximately 0.85. Furthermore, it may be seen from FIG. 8 that the reflectivity values of Rs, Rp, and Ra are all 0.5% or less in an angular range of $\theta = 0$ to approximately 46° with respect to the angle of incidence.

The anti-reflective film of the present example embodiment thus shows extremely low reflectivity characteristics over a broad angle-of-incidence range of $\theta = 0$ to approximately 46°. Furthermore, this film shows extremely low reflectivity characteristics in the case of perpendicular incidence even in lenses having a curvature at which the film-thickness ratio reaches 0.85.

The above example configuration and example embodiments provide anti-reflective films especially beneficial for use with ultraviolet light. The present invention can be applied not only to ultraviolet light, however, but also to visible light and infrared light.

In cases where the anti-reflective film of the present invention is applied to optical elements used in the optical system of a reduction-projection exposure apparatus, a good anti-reflective effect can be obtained in lenses with a small radius of curvature, and at locations within the optical system having a broad angle-of-incidence range. Accordingly, light loss and the occurrence of flare and ghosts and the like caused by residual reflectivity can be reduced, and a higher performance and higher NA can be achieved in the optical system of the reduction-projection exposure apparatus. Consequently, Improved exposure efficiency and exposure precision can be obtained.

Example Embodiment 3

The anti-reflective film of Example Embodiment 3 is shown in FIG. 9. The particular film composition of the present example embodiment is as follows:

| Substrate: | quartz glass |
|---|---|
| First layer: | $MgF_2$ $0.10\lambda_0$ |
| Second layer: | $LaF_3$ $0.65\lambda_0$ |
| Third layer: | $MgF_2$ $0.15\lambda_0$ |
| Fourth layer: | $LaF_3$ $0.36\lambda_0$ |
| Fifth layer: | $MgF_2$ $0.26\lambda_0$ |
| Medium: | air |

Here, $\lambda_0$ is the design center wavelength, and may be arbitrarily set as desired within the range of 150 to 300 nm. In this case, $\lambda_0$ is 193 nm. The refractive indices of the quartz glass substrate, $MgF_2$, and $LaF_3$ are 1.55, 1.42, and 1.69, respectively.

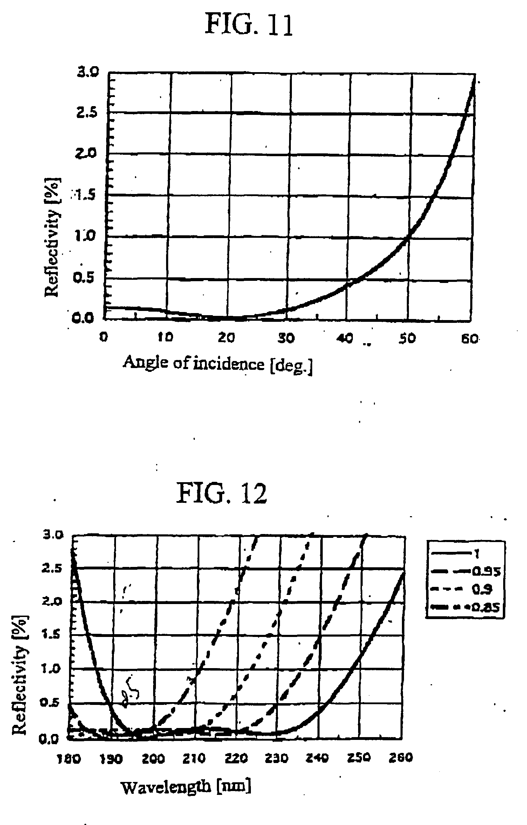

FIG. 10 shows the reflectivity characteristics of the anti-reflective film of the present example embodiment at an angle of incidence of $\theta = 0°$, and FIG. 11 shows the angle-of-incidence characteristics at a wavelength of $\lambda = 193$ nm.

It may be seen from FIG. 10 that, as an angle of incidence of $\theta = 0°$, a good anti-reflective effect of 0.5% reflectivity or less is obtained in a wavelength range of approximately 190 to 240 nm. It may be seen from the angular characteristics shown in FIG. 11 that the reflectivity is 0.5% or less up to an angle of approximately 40°.

FIG. 12 shows the spectroscopic reflection characteristics of the anti-reflective film of the present example embodiment at an angle of incidence of $\theta = 0°$ for respective film-thickness ratios of 1.0, 0.95, 0.9, and 0.85. FIG. 13 shows the angular characteristics of the reflectivity at a wavelength of $\lambda = 193$ nm for respective film-thickness ratios of 1.,0, 0.95, 0.9, and 0.85.

It may be seen from FIG. 12 that the reflection characteristics are shifted toward shorter wavelengths as the film-thickness ratio decreases, but that the reflectivity at $\lambda = 193$ nm is 0.5% or less even when the film-thickness ratio reaches 0.85. It may be seen from FIG. 13 that the angular range of low reflection becomes narrower as the film-thickness ratio decreases; however, it should be clear from a comparison of FIG. 13 and FIG. 23 that the narrowing of the angular range of low reflection that occurs when the film-thickness ratio decreases is much more gradual in the anti-reflective film of the present example embodiment than in the anti-reflective film of Conventional Example 2. In FIG. 13, the angular range over which the reflectivity is 0.5% or less maintains a width of approximately 40° down to a film-thickness ratio of 0.9, and deteriorates only to a width of approximately 30° even at a film-thickness ratio of 0.85. In FIG. 23, on the other hand, the reflectivity exceeds 0.5% for 0-degree incidence at a film-thickness ratio of 0.9.

In cases where the anti-reflective film of the present invention is applied to optical elements, and these optical elements are used in the optical system of a reduction-projection exposure apparatus, a good anti-reflective effect can be obtained over the broad angle-of-incidence range required for high-NA lenses, even in the case of lenses in which the film-thickness ratio is small. Accordingly, light loss and the occurrence of flare and ghosts, and the like caused by residual reflectivity can be reduced. As a result, a higher performance and higher NA can be achieved in the optical system of the reduction-projection exposure apparatus, and a superior exposure efficiency and exposure precision can be obtained.

The present invention is described above in terms of various example configurations and embodiments, but is not limited thereto. Various other specific examples and general modifications will be apparent to those of skill in the art. Accordingly, the scope of the invention is defined not by the examples above, but by the claims below.

**Claims**

1.  An anti-reflective film for altering an optical property of a substrate, the film comprising at least five layers counting from the substrate side, the first, third, and fifth layers having a low refractive index, the second and fourth layers having a high refractive index, the sum of the optical film-thicknesses of the first, second, and third layers being in the range of $0.6\lambda_0$ to $1.2\lambda_0$, the optical film-thickness of the fourth layer being in the range of $0.2\lambda_0$ to $0.4\lambda_0$, and the optical film-thickness of the fifth layer being in the range of $0.2\lambda_0$ to $0.3\lambda_0$, where $\lambda_0$ is a wavelength of light with which the film is used.

2.  The anti-reflective film of claim 1, wherein the sum of the optical film-thicknesses of the first, second, and third layers is in the range of $0.8\lambda_0$ to $1.2\lambda_0$, and the optical film-thickness of the fourth layer is in the range of $0.2\lambda_0$ to $0.3\lambda_0$.

3.  The anti-reflective film of claim 2, wherein the optical film-thickness of the first layer is in the range of $0.1\lambda_0$ to $0.25\lambda_0$, the optical film-thickness of the second layer is in the range of $0.45\lambda_0$ to $0.6\lambda_0$, and the optical film-thickness of the third layer is in the range of $0.25\lambda_0$ to $0.35\lambda_0$.

4.  The anti-reflective film claimed in Claim 1, wherein the optical film-thicknesses of the first and third layers are each in the range of $0.05\lambda_0$ to $0.2\lambda_0$, the optical film-thickness of the second layer is in the range of $0.5\lambda_0$ to $0.8\lambda_0$, the optical film-thickness of the fourth layer is in the range of $0.25\lambda_0$ to $0.4\lambda_0$, and the optical film-thickness of the fifth layer is in the range of $0.2\lambda_0$ to $0.3\lambda_0$.

5.  The anti-reflective film of claim 4, wherein the condition $n_L < n_S < n_H$ is satisfied, where $n_L$, $n_H$, and $n_S$ are the refractive index of the low-refractive-index material, the refractive index of the high-refractive-index material, end the refractive index of the substrate with which the film is to be used, respectively.

6.  The anti-reflective film of claim 1, wherein the condition $n_L < n_S < n_H$ is satisfied, where $n_L$, $n_H$ and $n_S$ are the refractive index of the low-refractive-index material, the refractive index of the high-refractive-index material, and the refractive index of the substrate with which the film is to be used, respectively.

7.  The anti-reflective film of claim 1, wherein the low-refractive-index material consists of one or more materials selected from [i] a first set consisting of magnesium fluoride, aluminum fluoride, sodium fluoride, lithium fluoride, calcium fluoride, barium fluoride, strontium fluoride, cryolite, thiolite, and silicon oxide, [ii] a second set consisting of mixtures of two or more compounds selected from the first set and [iii] a third set consisting of complex compounds of two or more compounds selected from the first set, and wherein the aforementioned high-refractive-index material consists of one or more materials selected from [i] a fourth set consisting at neodymium fluoride, lanthanum fluoride, gadolimium fluoride, dysprosium fluoride, yttrium fluoride, lead fluoride, and aluminum oxide, [ii] a fifth set consisting of mixtures of two or more compounds selected from the fourth set, and/or [iii] a sixth set consisting of complex compounds of two or more compounds selected from the fourth set.

8.  An optical element, comprising an anti-reflective film according to claim 1 supported on a substrate that transmits ultraviolet light having a wavelength of 150 nm to 300 nm.

9.  An optical element, comprising a substrate and an anti-reflective film comprising at least five layers laminated on the substrate, said anti-reflective film having a reflectivity at a specified wavelength of 1.0% or less in an angle-of-incidence range of 0 to 50°, and is 0.5% or less at an angle of incidence of 0° across a film-thickness ratio range of 1 to 0.85.

10. The anti-reflective film of claim 1, wherein the reflectivity of the film at a given wavelength is 0.5% or less over an angle-of-incidence range of 0 to 40° and across a film-thickness ratio range of 1 to 0.9.

11. An optical element, comprising the anti-reflective film of claim 1 and a substrate that transmits ultraviolet light having a wavelength of 150 nm to 300 nm, wherein the anti-reflective film has a reflectivity of 0.5% or less for a wavelength selected from a wavelength range of 150 nm to 300 nm.

12. A reduction-projection exposure apparatus, comprising an optical system comprising the optical element of claim

10.

## FIG. 1

16

15

14

13

12

11

## FIG. 2

# FIG. 3

# FIG. 4

FIG. 5

Film thickness 1.00 ratio

Film thickness 0.95 ratio

Film thickness 0.90 ratio

Film thickness :0.85 ratio

Film thickness 0.80 ratio

FIG. 6

16

15

14

13

12

11

## FIG. 7

## FIG. 8

# FIG. 9

# FIG. 10

# FIG. 11

# FIG. 12

## FIG. 13

## FIG. 14 (PRIOR ART)

# FIG. 15 (PRIOR ART)

# FIG. 16 (PRIOR ART)

## FIG. 17 (PRIOR ART)

2 3
2 2
2 1
1 1

## FIG. 18 (PRIOR ART)

Reflectivity [%]

Wavelength [nm]

## FIG. 19 (PRIOR ART)

## FIG. 20 (PRIOR ART)

## FIG. 21 (PRIOR ART)

Film thickness ratio 1 . 0 0

Film thickness 0 . 9 5 ratio

Film thickness 0 . 9 0 ratio

Film thickness 0 . 8 5 ratio

## FIG. 22 (PRIOR ART)

## FIG. 23 (PRIOR ART)